# EUROPEAN PATENT SPECIFICATION

(11) **EP 3 320 063 B1**
(45) Date of publication and mention of the grant of the patent: **14.09.2022**
(21) Application number: 16742067.8
(22) Date of filing: 21.06.2016
(51) Int. Cl.: C10M 149/06, C10M 149/12

(54) **VISCOSITY MODIFIERS FOR IMPROVED FLUOROELASTOMER SEAL PERFORMANCE**
VISKOSITÄTSMODIFIKATOREN FÜR VERBESSERTE FLUORELASTOMERDICHTUNGSLEISTUNG
AGENTS DE MODIFICATION DE LA VISCOSITÉ POUR UNE EFFICACITÉ AMÉLIORÉE DE L'ÉTANCHÉITÉ D'UN ÉLASTOMÈRE FLUORÉ

(30) Priority: 10.07.2015 US 201562190796 P
(43) Date of publication of application: 16.05.2018
(73) Proprietor: The Lubrizol Corporation, Wickliffe, OH 44092-2298 (US)
(72) Inventor: KNAPTON, Daniel J., Wickliffe, Ohio 44092-2298 (US)
(74) Representative: D Young & Co LLP
(86) International application number: PCT/US2016/038485
(87) International publication number: WO 2017/011152

(56) References cited:
- EP-A1- 0 569 639
- WO-A1-2010/014655
- WO-A1-2011/066242
- US-A1- 2013 005 628

## Description

### BACKGROUND

The disclosed technology relates to blends of viscosity modifiers which may impart improved seal performance to lubricants.

Viscosity modifiers have long been used in lubricants to improve the viscosity index of lubricants, that is, to reduce the variation of viscosity with temperature. Viscosity modifiers are typically polymeric materials of diverse types, including olefin copolymers, styrene-containing polymers, and ester-containing polymers such as polymethacrylates or polyacrylates. In some instances, viscosity modifiers may be functionalized to provide additional performance. Often, polar monomers, such as nitrogen-containing monomers, may be incorporated into the polymer chain or appended therefrom to impart dispersant functionality. In some instances the nitrogen functionality may be in a side-chain, that is, in a pendant ester or amide group containing the nitrogen functionality (as distinguished from, e.g., an amide group linking the pendant group to the polymer backbone such as would be found in monomer such as an alkyl methacrylamide). Nitrogen functionality in a pendant group tends to be more effective at providing dispersant functionality, compared with nitrogen within or attached to the main polymer chain.

In many industrial applications lubricating compositions come into contact with seals within the equipment in which they are used. Seals are made out of various materials, including fluoroelastomers (fluorinated elastomers). It is important that the lubricating composition used has good compatibility with the seals, otherwise seals may be degraded over time to the point that they fail, leading to fluid leakage increasing maintenance costs, longer down time for the equipment, and even the risk of equipment damage. Fluoroelastomer seals are used in many applications including gear systems found in devices such as automotive and truck manual transmissions, internal combustion engines, gear boxes, hydraulic systems, fuel systems power steering units, transfer cases, all-wheel-drive units, and wet brake systems.

One of the problems that may be encountered when using nitrogen-containing lubricant additives is seal compatibility, in particular, compatibility with fluoroelastomer seals. Of particular interest is the seal-compatibility problem that may arise when poly(meth)acrylate ester viscosity modifier polymers having 0.1 to 10, or 0.5 to 5 weight percent of amine nitrogen-containing dispersant monomer units are used. (As used herein "poly(meth)acrylate" means polyacrylate or polymethacrylate. Recitation of "monomer units" in the plural does not, by itself, require multiple types of monomer units but, rather, may also include multiple individual units of the same monomer). Such dispersant-viscosity modifier polymers may typically contribute 250 to 1500 parts per million of nitrogen to a lubricant in which they are incorporated. The dispersant-viscosity modifier polymers typically exhibit good viscosity index improving performance as well as cleanliness performance, such as dispersing oxidation products or other contaminants that may be present in the lubricant. However, the use of such polymers has been restricted because of their deleterious effect on fluoroelastomer seals.

There is an on-going need for lubricating compositions that can provide the required performance and protection for the equipment, but which also protect fluoroelastomer seals from attack or degradation thus reducing the risk of lubricant leakage, down time and ultimately equipment damage or failure.

Many different polymers have been used as viscosity modifiers. For example, U.S. Patent Application Publication 2011/0190182, Price et al., August 4, 2011, discloses a copolymer comprising units derived from monomers (i) an α-olefin and (ii) an ethylenically unsaturated carboxylic acid or derivatives thereof esterified with a primary alcohol branched at the β- or higher position. An example includes an esterified copolymer of dodecene-maleic anhydride polymer. In one embodiment the copolymer further include a nitrogen containing group; among many such groups listed is ami-noethylethyleneurea. The invention further provides for a lubricating composition containing said copolymer. Compositions derived from the copolymer and/or lubricating compositions described therein optionally further include other performance additives, comprising at least one of (among numerous others listed) viscosity modifiers (other than the polymer with pendant groups of the invention disclosed therein). In one embodiment the polymeric viscosity modifier is a poly(meth)acrylate.

U.S. Patent Application Publication 2012/0135092, Baum et al., May 31, 2012, discloses polymethacrylates as high VI viscosity modifiers. The viscosity modifier polymer comprises 15 weight percent to 35 weight percent monomer units of methyl (meth)acrylate, 0 to 10 weight percent monomer units of one or more C₂-C₆ alkyl (meth)acrylates, 50-85 weight percent monomer units of one or more C₈-C₃₀ alkyl (meth)acrylates, and 0 to 10 weight percent monomer units of one or more nitrogen-containing monomers. The nitrogen-containing monomer may comprise dimethylaminoethyl methacrylate or dimethylaminopropyl methacrylamide. Additional viscosity modifiers may also be present such as, among others, esters of (alpha-olefin maleic anhydride) copolymers. Dispersant viscosity modifiers include, among others, maleic anhydride-styrene copolymers reacted with an amine.

PCT publication WO 2014/047017, March 27, 2014 discloses mixtures of olefin-ester copolymer with ethylene α-olefin copolymer as a viscosity modifier. The olefin-ester copolymer may be an esterified copolymer with a backbone comprising units derived from (i) an α-olefin monomer of at least about 6 carbon atoms and (ii) an ethylenically unsaturated carboxylic acid or derivative thereof, wherein the mole ratio of (i) α-olefin monomer to (ii) carboxylic acid or derivative monomer is about 1:3 to about 3:1, said copolymer optionally containing nitrogen functionality which may be provided from, among other compounds, imidazolidinones.

PCT publication WO 2011/146456, November 24, 2011 discloses a lubricant containing a dispersant which includes a condensation product of a carboxylic functionalized polymer with an aromatic amine having at least 3 aromatic rings and at least one primary or secondary amino group. The lubricant exhibits good seal performance and corrosion performance in a low ash formulation.

U.S. Patent 6,124,249, Seebauer et al., September 26, 2000, discloses a copolymer comprising units derived from methacrylic acid ester of certain defined ester groups, and optionally nitrogen-containing vinyl monomers.

EP 0569639A1 discloses dispersant polymethacrylate viscosity index improvers.

### SUMMARY

The disclosed technology provides a lubricant composition comprising
(a) an oil of lubricating viscosity;
(b) a poly(meth)acrylate ester polymer comprising 50 to 99.5 weight percent ester monomer units wherein the alcohol-derived component of the ester monomer contains 6 to 24 carbon atoms and 0.5 to 5 weight percent of amine nitrogen-containing dispersant monomer units, said polymer having a nitrogen content of 0.05 to 1.0 weight percent;
(c) an esterified copolymer with a backbone comprising units derived from (i) an α-olefin monomer of at least 6 carbon atoms and (ii) an ethylenically unsaturated carboxylic acid; or ester or anhydride thereof, wherein the mole ratio of (i) α-olefin monomer to (ii) carboxylic acid or ester or anhydride monomer is 1:3 to 3:1, said copolymer further containing nitrogen functionality in groups pendant from the copolymer backbone, said pendant groups being represented by the structure 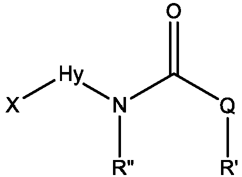 where X represents the point of attachment to the copolymer backbone through an ester, amide, imide, or amine salt linkage, Hy represents a hydrocarbylene group of 1 to 6 (or 1 to 4, or 2) carbon atoms; Q is -O- or -NR¹- or -CR²R³-; each of R¹, R², and R³ is independently hydrogen or a C₁ to C₆ alkyl group; R' and R" are each independently H or alkyl groups or are alkylene groups joined together to form, with the N-C(O)-Q structure, a 5- or 6-membered ring; and
wherein the amount of the poly(meth)acrylate polymer (b) is 2 to 30 percent by weight and the amount of the esterified copolymer (c) is 1 to 45 percent by weight.

The disclosed technology also provides a method for lubricating a mechanical device that comprises at least one fluoroelastomer seal that comes into contact with the lubricant for the device, comprising supply to the device the above-described lubricant composition.

The disclosed technology also provides a method for improving the fluoroelastomer seals compatibility of a lubricant composition comprising (a) an oil of lubricating viscosity and (b) a poly(meth)acrylate ester polymer comprising 50 to 99.5 weight percent ester monomer units wherein the alcohol-derived component of the ester monomer contains 6 to 24 carbon atoms and 0.5 to 5 weight percent of amine nitrogen-containing dispersant monomer units, said polymer having a nitrogen content of 0.05 to 1.0 weight percent; said method comprising including in said lubricant composition:
(c) an esterified copolymer with a backbone comprising units derived from (i) an α-olefin monomer of at least 6 carbon atoms and (ii) an ethylenically unsaturated carboxylic acid or derivative thereof, wherein the mole ratio of (i) α-olefin monomer to (ii) carboxylic acid or derivative monomer is 1:3 to 3:1, said copolymer further containing nitrogen functionality in groups pendant from the copolymer backbone, said pendant groups being represented by the structure 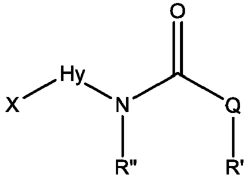 where X represents the point of attachment to the copolymer backbone through an ester or amide or imide linkage, Hy represents a hydrocarbylene group of 1 to 6 (or 1 to 4, or 2) carbon atoms; Q is -O- or -NR¹- or -CR²R³-; each of R¹, R², and R³ is independently hydrogen or a C₁ to C₆ alkyl group; R' and R" are each independently H or alkyl groups or are alkylene groups joined together to form, with the N-C(O)-Q structure, a 5- or 6-membered ring.

The present invention also provides use of an esterified copolymer for improving the fluoroelastomer seals compatibility of a lubricant composition, the lubricant comprising (a) an oil of lubricating viscosity and (b) a poly(meth) acrylate ester polymer comprising 50 to 99.5 weight percent ester monomer units wherein the alcohol-derived component of the ester monomer contains 6 to 24 carbon atoms and 0.5 to 5 weight percent of amine nitrogen-containing dispersant monomer units, said polymer having a nitrogen content of 0.05 to 1.0 weight percent; and wherein the use comprises including in said lubricant composition the esterified copolymer, wherein the esterified copolymer has a backbone comprising units derived from (i) an α-olefin monomer of at least 6 carbon atoms and (ii) an ethylenically unsaturated carboxylic acid or derivative thereof, wherein the mole ratio of (i) α-olefin monomer to (ii) carboxylic acid or derivative monomer is 1:3 to 3:1, said copolymer further containing nitrogen functionality in groups pendant from the copolymer backbone, said pendant groups being represented by the structure 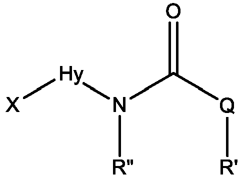 where X represents the point of attachment to the copolymer backbone through an ester or amide or imide linkage, Hy represents a hydrocarbylene group of 1 to 6 (or 1 to 4, or 2) carbon atoms; Q is -O- or -NR¹- or -CR²R³-; each of R¹, R², and R³ is independently hydrogen or a C₁ to C₆ alkyl group; R' and R" are each independently H or alkyl groups or are alkylene groups joined together to form, with the N-C(O)-Q structure, a 5- or 6-membered ring.

The disclosed technology, therefore, solves the problem of providing good viscosity index performance, good dispersancy performance, while exhibiting reduced deterioration of fluoroelastomer seals.

### DETAILED DESCRIPTION

Various preferred features and embodiments will be described below by way of non-limiting illustration.

The disclosed technology includes a lubricant composition, one component of which is an oil of lubricating viscosity. Such oils include natural and synthetic oils, oil derived from hydrocracking, hydrogenation, and hydrofinishing, unrefined, refined and re-refined oils and mixtures thereof.

Unrefined oils are those obtained directly from a natural or synthetic source generally without (or with little) further purification treatment. Refined oils are similar to the unrefined oils except they have been further treated in one or more purification steps to improve one or more properties. Purification techniques are known in the art and include solvent extraction, secondary distillation, acid or base extraction, filtration, percolation and the like. Re-refined oils are also known as reclaimed or reprocessed oils, and are obtained by processes similar to those used to obtain refined oils and often are additionally processed by techniques directed to removal of spent additives and oil breakdown products.

Natural oils useful in making the inventive lubricants include animal oils, vegetable oils (e.g., castor oil), mineral lubricating oils such as liquid petroleum oils and solvent-treated or acid-treated mineral lubricating oils of the paraffinic, naphthenic or mixed paraffinic-naphthenic types and oils derived from coal or shale or mixtures thereof.

Synthetic lubricating oils are useful and include hydrocarbon oils such as polymerized and interpolymerized olefins (e.g., polybutylenes, polypropylenes, propylene-isobutylene copolymers); poly(1-hexenes), poly(1-octenes), poly(1-decenes), and mixtures thereof; alkyl-benzenes (e.g. dodecylbenzenes, tetradecylbenzenes, dinonylbenzenes, di-(2-ethylhexyl)-benzenes); polyphenyls (e.g., biphenyls, terphenyls, alkylated polyphenyls); diphenyl alkanes, alkylated diphenyl alkanes, alkylated diphenyl ethers and alkylated diphenyl sulfides and the derivatives, analogs and homologs thereof or mixtures thereof. Other synthetic lubricating oils include polyol esters (such as Priolube^{®}3970), diesters, liquid esters of phosphorus-containing acids (e.g., tricresyl phosphate, trioctyl phosphate, and the diethyl ester of decane phosphonic acid), or polymeric tetrahydrofurans. Synthetic oils may be produced by Fischer-Tropsch reactions and typically may be hydroisomerized Fischer-Tropsch hydrocarbons or waxes. In one embodiment oils may be prepared by a Fischer-Tropsch gas-to-liquid synthetic procedure as well as other gas-to-liquid oils.

Oils of lubricating viscosity may also be defined as specified in the American Petroleum Institute (API) Base Oil Interchangeability Guidelines (2011). The five base oil groups are as follows: Group I (sulfur content >0.03 wt %, and/or <90 wt % saturates, viscosity index 80 - <120); Group II (sulfur content <0.03 wt %, and >90 wt % saturates, viscosity index 80 - <120); Group III (sulfur content <0.03 wt %, and >90 wt % saturates, viscosity index >120); Group IV (all polyalphaolefins (PAOs)); and Group V (all others not included in Groups I, II, III, or IV). The oil of lubricating viscosity may also be an API Group II+ base oil, which term refers to a Group II base oil having a viscosity index greater than or equal to 110 and less than 120, as described in SAE publication "Design Practice: Passenger Car Automatic Transmissions", fourth Edition, AE-29, 2012, page 12-9, as well as in US 8,216,448, column 1 line 57.

The oil of lubricating viscosity comprises an API Group I, Group II, Group III, Group IV, Group V oil or mixtures thereof. The oil of lubricating viscosity may be an API Group IV oil, or mixtures of two or more polyalphaolefins. The polyalphaolefin may be prepared by metallocene catalyzed processes or from a non-metallocene process. Often the oil of lubricating viscosity is an API Group I, Group II, Group II+, Group III, Group IV oil or mixtures thereof. Alternatively the oil of lubricating viscosity is often an API Group II, Group II+, Group III or Group IV oil or mixtures thereof. Alternatively the oil of lubricating viscosity is often an API Group II, Group II+, Group III oil or mixtures thereof.

The amount of the oil of lubricating viscosity present is typically the balance remaining after subtracting from 100 wt % the sum of the amount of the additive as described herein above, and the other performance additives. Typical amounts may include 25 to 97 percent by weight of the lubricant composition, or 35 to 95, or 40 to 93, or 45 to 90, or 50 to 85, or 55 to 80, or 40 to 70 percent by weight.

The lubricating composition may be in the form of a concentrate and/or a fully formulated lubricant. If the lubricating composition of the invention is in the form of a concentrate (which may be combined with additional oil to form, in whole or in part, a finished lubricant), the ratio of the of components of the invention to the oil of lubricating viscosity and/or to diluent oil include the ranges of 1:99 to 99:1 by weight, or 80:20 to 20:80, or 60:40 to 40:60 by weight.

The lubricant formulation of the disclosed technology includes a poly(meth)acrylate ester polymer with certain specified ester functionality and amine-nitrogen-containing functionality. A majority of the ester monomer units, that is, 50-99.5 percent by weight, or 70 to 90 percent, or 80-99 percent, or 90 to 98.5 percent, or 95 to 98.3 percent are esters containing 6 to 24 carbon atoms in the alcohol-derived portion of the ester (that is, in "R" in the structure XC(O)O-R). The alcohol-derived R group may be a hydrocarbyl group such as an alkyl, cycloalkyl, aryl, or heteroatom-containing group. In certain embodiments the alcohol-derived group is an alkyl group.

In certain embodiments the alcohol derived groups may be mixtures of relatively shorter and relatively longer hydrocarbyl groups, for instance, mixtures of groups of 6 to 10 carbon atoms (e.g., C6-C10 alkyl groups) and groups of 12 to 18 carbon atoms (e.g., C12-C18 alkyl groups). In certain embodiments the poly(meth)acrylate ester polymer comprises monomer units of C12 to C15 alkyl(meth)acrylates. In certain embodiments the ester monomers comprise 2-ethylhexyl methacrylate units and C12-14 alkyl methacrylate units or C12-15 alkyl methacrylate units. In certain embodiments the weight ratio of the (meth)acrylate monomer units with the shorter hydrocarbyl groups to the (meth)acrylate monomers with the longer hydrocarbyl groups may be 0.1:1 to 1:1, or 0.2:1 to 0.8:1, or 0.4:1 to 0.5:1, or 0.42-0.46:1. In certain embodiments mixtures of 2-ethylhexyl methacrylate and mixed C12-14 alkyl methacrylates may be present in each of the foregoing amounts or ranges.

Other (meth)acrylate ester monomers may optionally be present as well, having differing numbers of carbon atoms in the alcohol-derived portion. For example, methyl methacrylate may be present in amounts of 0.1 to 25 weight percent, or 1 to 20, or 5 to 15 weight percent. One or more C2-C5 alkyl (meth)acrylates may also be present in similar amounts, for example, ethyl methacrylate, n-propyl methacrylate, isopropyl methacrylate, n-butyl methacrylate, iso-butyl methacrylate, t-butyl methacrylate, and the various isomers of pentyl methacrylate. Linear, branched, cyclic, and aromatic (meth)acrylates may be present. The total amount of such optional monomers may be 0 to 49.5 percent by weight, or 1 to 40, or 2 to 35, or 5 to 30, or 10 to 20 percent.

The poly(meth)acrylate ester copolymer will also contain an amine nitrogen-containing monomer moiety in an amount of 0.5 to 5 percent by weight, or 1 to 4 percent or 1.5 to 3 percent or 1.7 to 2.0 percent by weight based on the weight of the polymer. The poly(meth)acrylate ester monomer will typically contain the amine-nitrogen-containing monomer of a type suitable to impart dispersant functionality to the polymer, which is particularly effective when the nitrogen-containing monomer contains an amino group that is not within the main chain of the polymer and is not a part of an amide or amine linkage attaching the nitrogen-containing moiety to the main polymer backbone. Thus, pendant amino functionality such as 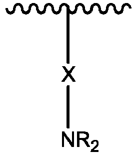 may be suitable, where X is a connecting group to the polymer backbone, typically comprising a chain of at least 2 or 3 or 4 atoms, each R is independently hydrogen or a hydrocarbyl group, and the wavy line represents the polymer backbone. However, functionality such as 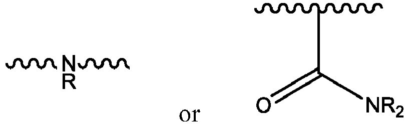 may be less favorable for providing dispersant functionality, the latter not having amine functionality at all but rather being an amide.

The nitrogen-containing moiety may be a monomer such as (meth)acrylic monomers such as methacrylates or methacrylamides. That is, the linkage of the nitrogen-containing moiety to the acrylic moiety may be through a nitrogen atom or alternatively an oxygen atom, in which case the nitrogen of the monomer will be located elsewhere in the monomer unit. The nitrogen-containing monomer may also be other than a (meth)acrylic monomer, such as vinyl-substituted nitrogen heterocyclic monomers and vinyl substituted amines. Nitrogen-containing monomers are well known, examples being disclosed, for instance, in U.S. Patent 6,331,603. Among the suitable monomers are dialkylaminoalkyl acrylates, dialkylaminoalkyl methacrylates, dialkylaminoalkyl acrylamides, dialkylaminoalkyl methacrylamides. The nitrogen-containing monomer may be, for instance, N-(3-(dimethylamino)propyl)methacrylamide, dimethylaminopropyl methacrylamide, dimethylaminoethyl methacrylamide, N-vinyl pyrrolidone, N-vinylimidazole, or N-vinyl caprolactam. It may also be a (meth)acrylamide based on any of the aromatic amines disclosed in WO2005/ 087821 including 4-phenylazoaniline, 4-aminodiphenylamine, 2-aminobenzimidazole, 3-nitroaniline, 4-(4-nitrophenylazo)aniline, N-(4-amino-5-methoxy-2-methyl-phenyl)-benzamide, N-(4-amino-2,5-dimethoxy-phenyl)-benzamide, N-(4-amino-2,5-dieth-oxy-phenyl)-benzamide, N-(4-amino-phenyl)-benzamide, 4-amino-2-hydroxy-benzoic acid phenyl ester, and N, N-dimethylphenylenediamine.

The amine functionality may be imparted by incorporating an amine-containing monomer into the polymer backbone during the polymerization process. Alternatively, an amine (such as typically a diamine having at least one primary amino group) may be condensed onto a carbonyl group which is a part of a preexisting polymer. Thus, an amine such as dimethylaminopropylamine may be reacted with a (meth)acrylate ester polymer which may contain some unesterified (meth)acrylic acid functionality.

Methods for preparing alkyl (meth)acrylate polymers are well known and include polymerization by free radical polymerization of the (meth)acrylate monomers, by known methods. These methods include conventional free radical polymerization as well as various known methods of controlled polymerization such as atom transfer radical polymerization (ATRP) and reversible addition-fragmentation chain transfer (RAFT).

The amine-containing monomer or amine-containing moiety that is condensed onto functionality of the polymer will typically be present in an amount sufficient to impart a nitrogen content of 0.05 to 1.0 weight percent to the polymer, or 0.1 to 0.7, or 0.2 to 0.5 percent nitrogen. In some embodiments, for instance, where both amine and amide functionality may be present in the polymer, the amount of amine functionality, expressed as percent nitrogen, may be 0.03 to 1 weight percent of the polymer, or 0.05 to 0.7, or 0.1 to 0.5, or 0.15 to 0.3 weight percent.

The weight average molecular weight of the poly(meth)acrylate ester copolymer may be 5,000 to 50,000, or 10,000 to 30,000, or 15,000 to 25,000, particularly for use in driveline (e.g., gear or axle) lubricants. For transmission lubricants the weight average molecular weight may be as high as 75,000.

The amount of the poly(meth)acrylate ester copolymer (b) in a lubricant may be 2 to 30 percent by weight, or 3 to 25, or 5 to 20, or 7 to 17, or 10 to 15 percent.

Another component of the lubricants of the disclosed technology is an esterified copolymer with a backbone comprising units derived from (i) an α-olefin monomer of at least about 6 carbon atoms and (ii) an ethylenically unsaturated carboxylic acid or ester or anhydride thereof, which also contains nitrogen functionality. Copolymers of α-olefins and unsaturated carboxylic acids are described in U.S. patent publication 2011-0190182 (August 4, 2011). The α-olefin monomer will have at least 6 carbon atoms, and in some embodiments 8 to 20, or 10 to 18, or 12 to 16, or 12 carbon atoms. Examples of alpha-olefins include 1-decene, 1-undecene, 1-dodecene, 1-tridecene, 1-tetradecene, 1-pentadecene, 1-hexadecene, 1-heptadecene 1-octadecene, and mixtures thereof. An example of a useful alpha-olefin is 1-dodecene. The α-olefins may be linear or branched or mixtures thereof; in one embodiment they are predominantly linear, e.g., at least 90 % linear species.

The unsaturated carboxylic acid monomer, or ester or anhydride thereof thereof, is present in the copolymer predominantly as an ester. Typical ethylenically unsaturated carboxylic acids include fumaric acid, maleic acid (which is often conveniently supplied as maleic anhydride), (meth)acrylic acid, or itaconic acid (or itaconic anhydride) or derivatives thereof to form a copolymer. The carboxylic acid may be in its ester form at the time it is copolymerized with the alpha-olefin, although in one common embodiment it is supplied as the acid, lower ester (e.g., methyl ester), or anhydride form and then converted to the desired ester after polymerization.

The copolymer may be prepared by reacting the alpha olefin and the carboxylic acid monomer under copolymerizing conditions. If the carboxylic acid (or equivalent) monomer is maleic anhydride, the initial product will be a copolymer of α-olefin and maleic anhydride. The copolymer may optionally be prepared in the presence of a free radical initiator, solvent, chain transfer agent, or mixtures thereof. Solvents are known and are typically a liquid organic diluent. Generally, the solvent has a boiling point high enough to provide the required reaction temperature for the polymerization. Illustrative diluents or solvents include toluene, t-butyl benzene, benzene, xylene, chlorobenzene, and various petroleum fractions boiling above 125°C.

Free radical initiators are known and include peroxy compounds, peroxides, hydroperoxides, and azo compounds which decompose thermally to provide free radicals. In certain embodiments the free radical generating reagent is t-butyl peroxide, t-butyl hydroperoxide, t-amyl peroxide, cumyl peroxide, t-butyl peroctoate, t-butyl-m-chloroperbenzoate, azobisisovaleronitrile, or mixtures thereof.

Chain transfer agents are also known to the person skilled in the art. The chain transfer agent may be added to a polymerization as a means of controlling the molecular weight of the polymer. The chain transfer agent may include sulfur-containing chain transfer agents such as n- and t-dodecyl mercaptan, 2-mercapto ethanol, or methyl-3-mercaptopropionate.

The acid functionality of the copolymer will be mostly in the form of ester. the alcohol-derived portion of the ester functionality may comprise units derived (such as by condensation) from an alcohol or a mixture of alcohols having 4 carbon atoms, 8 to 10 carbon atoms, or 14 to 18 carbon atoms, or mixture thereof. In one embodiment the ester monomer units in the esterified copolymer comprise alcohol-derived ester units of butanol, of one or more C8-C10 alcohols, and of a C14-C18 alcohol. In one embodiment the alcohol or alcohols may comprise alcohols containing 12 to 60 carbon atoms, or 16 to 30 carbon atoms. The alcohols may be primary, secondary, or tertiary alcohols, and in certain embodiments will comprise primary alcohols. The alcohols may be linear or branched. In certain embodiments the alcohols will be or will comprise primary alcohols that are branched at the β- or higher position. For example, 5 to 15 mole percent of the ester functionality may have an alcohol-derived moiety from a primary alcohol branched at the β- or higher position, and 0.1 to 95 mole percent of the ester functionality may have an alcohol-derived moiety from a linear alcohol or an α-branched (i.e., secondary) alcohol. Alcohols branched at the β-position may be Guerbet alcohol, which may be prepared as disclosed in US Patent 4,767,815 (see column 5, line 39 to column 6, line 32).

The carboxylic functionality of the copolymer will be predominantly, but not exclusively, in the ester form. Avoidance of stoichiometrically complete esterification can be avoided by known methods, such as using less than a stoichiometric amount of alcohol for esterification or by selecting reaction conditions of time and temperature conducive to less than complete condensation. Typically 90 to 98 percent, or 94 to 97 percent, or 95 to 96 percent of the carboxy groups will be converted to ester with one of the alcohols as described above. Of the remaining carboxy groups, some may be retained in the acid form (e.g., 0 to 3, or1 to 2 mole percent residual carboxylic acid based on all the carboxy groups in the polymer), but some will be reacted with a nitrogen-containing monomer to impart nitrogen-containing groups pendant from the polymer.

The nitrogen-containing pendant groups are represented by the general structure 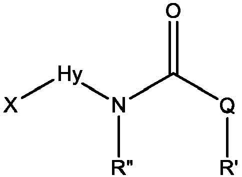 where X represents the point of attachment to the copolymer backbone through an ester amide, imide, or amine salt linkage, Hy represents a hydrocarbylene group of 1 to about 6 (or 1 to 4, or 2) carbon atoms; Q is -O- or -NR¹- or -CR²R³-; each of R¹, R², and R³ is independently hydrogen or a C₁ to C₆ alkyl group; R' and R" are each independently H or alkyl groups or are alkylene groups joined together to form, with the N-C(O)-Q structure, a 5- or 6-membered ring. If the pendant group is attached through an ester linkage, it may be formed form a species in which X corresponds to an OH group, that is, an alcohol. If it is attached through an amide or imide or amine salt linkage, then it may be formed from a species in which X corresponds to an amine group, that is, an NH₂ or an NHR group, where R is a hydrocarbyl group having, e.g., 1 to 6, or 1 to 4, or 1 carbon atom.

In certain embodiments, in the pendant group, X represents an amide, imide, or amine salt linkage, Hy is an ethylene group, Q is NH, and R' and R" together with the N-C(O)-Q structure form a five-membered ring. Such a group may be prepared by reaction (e.g., condensation) of 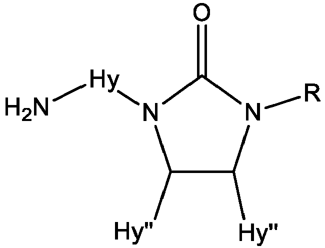 through amide, imide, or salt linkage of NH₂ group with or onto an acid group of the polymer backbone. Typically; R is H or C₁₋₄ or C₂ alkyl, Hy is a hydrocarbylene group of 1-6 or 1-4 or 2 carbons and each Hy" is H or a hydrocarbyl group, e.g. C₁₋₄ or C₂ alkyl. In one particular embodiment, the pendant group is the reaction product (e.g., condensation product) of a carboxylic acid group of the polymer with (aminoethyl)ethyleneurea, that is, 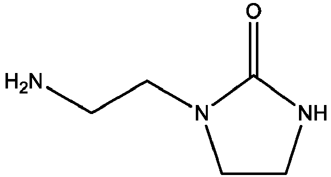 through an amide or imide linkage. (Aminoethyl)ethylene urea is commercially available and may be prepared, for instance, by reaction of diethylenetriamine with urea.

The pendant group described above will typically contribute 0.01 wt % to 0.3 wt % (or 0.05 wt % to 0.25 wt %, or 0.075 wt % to 0.2 wt %) nitrogen to the polymer. If the linkage X contains a nitrogen atoms as in, e.g., an amide or imide linkage, about 1/3 of the above amounts of nitrogen will be contributed by the nitrogen of the linkage and about 2/3 nitrogen will be provided by the remainder of the pendant moiety, e.g., by the nitrogen atoms in an imidazolidinone ring. If the linkage X is through an oxygen atom as in an ester linkage, the total amount of nitrogen contributed by the moiety will be that amount in the remainder of the pendant moiety. The weight percent of such pendant group (as illustrated by aminoethyl ethyleneurea but not limited thereto) within the polymer composition may be 0.03 to 3 percent by weight, or 0.15 to 1.5, or 0.3 to 0.75, or 0.5 to 0.6 percent by weight.

It will be noted that the pendant group as shown does not contain any amine functionality (or no more than an incidental impurity amount), once it is linked to the polymer chain by reaction of the "X" group. Without intending to be bound by any theory, it is believed that the presence of amine functionality, particularly in pendant groups, may be deleterious to seals, and thus materials such as the above-described aminoethyl ethyleneurea are useful for the disclosed technology. Other nitrogen moieties may also be present as pendant groups from the polymer backbone, even though they may contain amine nitrogen atoms, provided, however, that the amount thereof is sufficiently small to not adversely affect the seal performance of the resulting lubricant and not interfere with the positively beneficial effect on performance of the disclosed technology. The amount of such other nitrogen moieties may be less than 1 percent by weight, or 0.001 to 0.5 percent, or 0.01 to 0.3 percent, or to 0.01, or to 0.05 percent. Some examples of other nitrogen moieties that may be appended from the polymer chain include aminodiphenylamine, dimethylaminopropylamine, aminopropylmorpholine, aminopropylpyrrolidinone, and aminopropylimidazole.

The weight average molecular weight of the esterified copolymer (c) will typically be 5,000 to 35,000, or 5,000 to 21,000, or 8,000 to 20,000, or 12,000 to 18,000. All molecular weights are determined by gel permeation chromatography (GPC) calibrated by polystyrene standards.

The amount of the esterified copolymer (c) in a fully formulated lubricant is 1 to 45 percent by weight, or 10 to 45 or 20 to 40 percent.

Other materials may be present in amounts to provide their characteristic performance to a lubricant composition. For example, when the lubricant is used as a gear oil, such as an automatic gear oil, the formulation may contain a sulfur-containing anti-wear or anti-scuff agent; an extreme pressure agent which may be a phosphoric ester amine salt; a dispersant, such as a succinimide dispersant, which may be treated with a borating agent; an anticorrosion agent; a friction modifier; an anti-rust agent; an anti-foam agent; and an antioxidant. Some of these materials may function in multiple roles, as will be apparent to the person skilled in the art.

Anti-wear or anti-scuff agents (scuffing being a form of wear) and/or extreme pressure agents include sulfur-containing materials such as sulfurized olefins, such as a dialkyl polysulfide, where the alkyl group(s) may be, for instance, butyl groups. Sulfurized olefins may also function as extreme pressure agents and as antioxidants. Other antiwear agents include sulfurized vegetable oils and other sulfur-containing materials such as zinc dialkyldithiophosphates. Non-sulfur-containing antiwear agents include alkyl borate esters and hydroxyacid esters, amides, or imides such as tartarate esters, tar-tramides, or tartrimides. The amount of the anti-wear agent may be 0.5 to 10 weight percent of the composition, such as 1 to 8 or 2 to 6 or 4 to 5 weight percent.

Extreme pressure agents likewise may include sulfur-containing species but may also contain phosphorus-containing species. One such material is an amine salt of a phosphorus acid ester. This material can serve as one or more of an extreme pressure agent and a wear preventing agent. The amine salt of a phosphorus acid ester may include phosphoric acid esters and salts thereof; dialkyldithiophosphoric acid esters and salts thereof; phosphites; and phosphorus-containing carboxylic esters, ethers, and amides; and mixtures thereof. The amine salt of the phosphorus acid ester may comprise any of a variety of chemical structures. In particular, a variety of structures are possible when the phosphorus acid ester compound contains one or more sulfur atoms, that is, when the phosphorus-containing acid is a thiophosphorus acid ester, including mono- or dithiophosphorus acid esters. A phosphorus acid ester may be prepared by reacting a phosphorus compound such as phosphorus pentoxide with an alcohol. Suitable alcohols include those containing up to 30 or to 24, or to 12 carbon atoms, including primary or secondary alcohols such as isopropyl, butyl, amyl, s-amyl, 2-ethylhexyl, hexyl, cyclohexyl, octyl, decyl and oleyl alcohols, as well as any of a variety of commercial alcohol mixtures having, e.g., 8 to 10, 12 to 18, or 18 to 28 carbon atoms. Polyols such as diols may also be used. The amines which may be suitable for use as the amine salt include primary amines, secondary amines, tertiary amines, and mixtures thereof, including amines with at least one hydrocarbyl group, or, in certain embodiments, two or three hydrocarbyl groups having, e.g., 2 to 30 or 8 to 26 or 10 to 20 or 13 to 19 carbon atoms.

In certain embodiments, the amine salt of the phosphorus acid ester may be obtained by reacting phosphorus pentasulfide with one or more alcohols having 4 to 13, or 4 to 8, or 6, carbon atoms, with an alkylene diol or an alkylene oxide, and further with phosphorus pentoxide, and salting the resulting material with one or more amines having 2 to 20 or 12 to 24 carbon atoms

The amount of the extreme pressure agent (and in one embodiment, the phosphorus-containing extreme pressure agent as described) may be 0.3 to 5 percent by weight, or 0.5 to 4, or 0.8 to 3, or 1 to 2 percent by weight.

Another component may be a dispersant, such as a borated dispersant. Dispersants are well known in the field of lubricants and include primarily what is known as ashless dispersants and polymeric dispersants. Ashless dispersants are so-called because, as supplied, they do not contain metal and thus do not normally contribute to sulfated ash when added to a lubricant. However they may, of course, interact with ambient metals once they are added to a lubricant which includes metal-containing species. Ashless dispersants are characterized by a polar group attached to a relatively high molecular weight hydrocarbon chain. Typical ashless dispersants include N-substituted long chain alkenyl succinimides, having a variety of chemical structures including typically 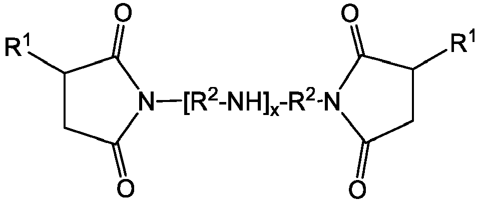 where each R¹ is independently an alkyl group, frequently a polyisobutylene group with a molecular weight (Mₙ) of 500-5000 based on the polyisobutylene precursor, and R² are alkylene groups, commonly ethylene (C₂H₄) groups. Such molecules are commonly derived from reaction of an alkenyl acylating agent with a polyamine, and a wide variety of linkages between the two moieties is possible beside the simple imide structure shown above, including a variety of amides and quaternary ammonium salts. In the above structure, the amine portion is shown as an alkylene polyamine, although other aliphatic and aromatic mono- and polyamines may also be used. Also, a variety of modes of linkage of the R¹ groups onto the imide structure are possible, including various cyclic linkages. The ratio of the carbonyl groups of the acylating agent to the nitrogen atoms of the amine may be 1:0.5 to 1:3, and in other instances 1:1 to 1:2.75 or 1:1.5 to 1:2.5. Succinimide dispersants are more fully described in U.S. Patents 4,234,435 and 3,172,892 and in EP 0355895.

Another class of ashless dispersant is high molecular weight esters. These materials are similar to the above-described succinimides except that they may be seen as having been prepared by reaction of a hydrocarbyl acylating agent and a polyhydric aliphatic alcohol such as glycerol, pentaerythritol, or sorbitol. Such materials are described in more detail in U.S. Patent 3,381,022. Another class of ashless dispersant is Mannich bases. These are materials which are formed by the condensation of a higher molecular weight, alkyl substituted phenol, an alkylene polyamine, and an aldehyde such as formaldehyde and are described in more detail in U.S. Patent 3,634,515.

Other dispersants include polymeric dispersant additives, which are generally hydrocarbon-based polymers which contain polar functionality to impart dispersancy characteristics to the polymer.

Dispersants can also be post-treated by reaction with any of a variety of agents. Among these are urea, thiourea, dimercaptothiadiazoles, carbon disulfide, aldehydes, ketones, carboxylic acids, hydrocarbon-substituted succinic anhydrides, nitriles, epoxides, boron compounds, and phosphorus compounds. References detailing such treatment are listed in U.S. Patent 4,654,403. It is common, for lubricants for gears, that the dispersant will be a borated dispersant, such as a succinimide dispersant that has been reacted with boric acid and may contain 0.3 to 3 weight percent boron, such as 0.7 to 2 or 1 to 1.7 percent boron (as calculated on an active chemical, oil-free basis).

The amount of the dispersant, and in one embodiment the amount of the borated dispersant, in a fully formulated lubricant of the present technology may be 0.1 percent to 8 percent by weight of the lubricant composition, or 0.3 to 5 percent, or 0.5 to 3 percent or 0.8 to 1.5 percent by weight.

Another component that may be present is an anti-corrosion agent such as a thiadiazole compound. Examples of thiadiazoles include 2,5-dimercapto-1,3,4-thiadiazole, or oligomers thereof, hydrocarbyl-substituted 2,5-dimercapto-1,3,4-thiadiazole, hydrocarbylthio-substituted 2,5-dimercapto-1,3,4-thiadiazole, or oligomers thereof. The oligomers of hydrocarbyl-substituted 2,5-dimercapto-1,3,4-thiadiazole typically form by forming a sulfur-sulfur bond between 2,5-dimercapto-1,3,4-thiadiazole units to form oligomers of two or more of said thiadiazole units. These thiadiazole compounds may also be used in the post treatment of dispersants as mentioned elsewhere herein in the formation of a dimercaptothiadiazole derivative of a polyisobutylene succinimide.

Examples of suitable thiadiazole compounds include dimercaptothiadiazole, 2,5-dimercapto-[1,3,4]-thiadiazole, 3,5-dimercapto-[1,2,4]-thiadiazole, 3,4-dimercapto-[1,2,5]-thiadiazole, or 4-5-dimercapto-[1,2,3]-thiadiazole. Typically readily available materials such as 2,5-dimercapto-1,3,4-thiadiazole or a hydrocarbyl-substituted 2,5-dimer-capto-1,3,4-thiadiazole or a hydrocarbylthio-substituted 2,5-dimercapto-1,3,4-thiadiazole are commonly utilized. In different embodiments the number of carbon atoms on the hydrocarbyl-substituent group may include 1 to 30, 2 to 25, 4 to 20, 6 to 16, or 8 to 10.

In one embodiment, the thiadiazole compound may be the reaction product of a phenol with an aldehyde and a dimercaptothiadiazole. The phenol may include an alkyl phenol wherein the alkyl group contains at least 6, e.g., 6 to 24, or 6 (or 7) to 12 carbon atoms. The aldehyde may include an aldehyde containing 1 to 7 carbon atoms or an aldehyde synthon, such as formaldehyde. Useful thiadiazole compounds include 2-alkyldithio-5-mercapto-[1,3,4]-thiadiazoles, 2,5-bis(alkyl-dithio)-[1,3,4]-thiadiazoles, 2-alkylhydroxyphenylmethylthio-5-mercapto-[1,3,4]-thiadiazoles (such as 2-[5-heptyl-2-hydroxyphenylmethylthio]-5-mercapto-[1,3,4]-thiadiazole), and mixtures thereof.

In one embodiment the thiadiazole compound may include at least one of 2,5-bis(tert-octyldithio)-1,3,4-thiadiazole, 2,5-bis(tert-nonyldithio)-1,3,4-thiadiazole, or 2,5-bis(tert-decyldithio)-1,3,4-thiadiazole.

Other anti-corrosion agents include aromatic triazole compounds such as tolyltriazole and substituted tolyltriazole compounds.

The amount of the anti-corrosion agent, such as the amount of the thiadiazole compound in a lubricant formulation, may be 0.05 to 1 percent by weight, or 0.07 to 0. 5, or 0,07 to 0.3, or 0.1 to 0.2 percent by weight.

Another component that may be used in the composition used in the present technology is a friction modifier. Friction modifiers may have various functions in different applications. For some applications in transmission lubricants, friction modifiers are designed to provide a high, stable dynamic coefficient of friction combined with a relatively low static coefficient of friction. In other applications, friction modifiers are designed to provide as low a coefficient of friction as possible, to minimize frictional losses and thus improve energy efficiency in a mechanical device. The primary use of a friction modifier in the presently disclosed technical areas is typically to reduce friction. Such friction modifiers are well known to those skilled in the art. A list of friction modifiers that may be used is included in U.S. Patents 4,792,410, 5,395,539, 5,484,543 and 6,660,695. U.S. Patent 5,110,488 discloses metal salts of fatty acids and especially zinc salts, useful as friction modifiers. A list of friction modifiers that may be used may include:

| | |
|---|---|
| fatty phosphites | borated alkoxylated fatty amines |
| fatty acid amides | metal salts of fatty acids |
| fatty epoxides | sulfurized olefins |
| borated fatty epoxides | fatty imidazolines |
| fatty amines | condensation products of carboxylic acids and polyalkylene-polyamines |
| glycerol esters | metal salts of alkyl salicylates |
| borated glycerol esters | amine salts of alkylphosphoric acids |
| alkoxylated fatty amines | ethoxylated alcohols |
| oxazolines | imidazolines |
| hydroxyalkyl amides | polyhydroxy tertiary amines |
| dialkyl tartrates | molybdenum compounds |

and mixtures of two or more thereof.

In one embodiment the friction modifier may be a fatty acid amide such as oleamide. The amount of the friction modifier in a fully formulated lubricant may be 0.05 to 1 percent by weight, or 0.07 to 0. 5, or 0,07 to 0.3, or 0.1 to 0.2 percent by weight.

Antirust agents, or rust inhibitors, may also be employed, often in an amount of 0.01 to 1 percent, or 0.02 to 0.1, or 0.04 0.08 to percent by weight. Rust inhibitors include organic compound having one or more of an amine group, an ether group, a hydroxyl group, a carboxylic acid, ester, or salt group, or a nitrogen-containing heterocyclic group. Examples thus include fatty amines such as oleylamine, hydroxyamines such as isopropanolamine; condensates of hydroxyamines with fatty acids (such as the product of tall oil fatty acid with diethanolamine or with N-hydroxyethylethylenedia-mine), carboxylic acids, esters, and salts (such as alkyl substituted succinic acids, esters, and amine or ammonium salts, e.g., the mono- or di-ester from a succinic acid and propylene oxide), and compounds with multiple functionalities. Examples of the latter include sarcosine derivatives, having amide and acid functionality (e.g., R¹CO-NR²-CH₂-COOH) as well as materials with alcohol and amine functionality (e.g., isopropanolamine). Materials with nitrogen-containing heterocyles include triazole compounds such as tolyltriazole and triazine salts. Other rust inhibitors include ethoxylated phenols. Other rust inhibitors include various oxygenated materials that may be formed by partial oxidation of waxes or oils. Examples include paraffinic oil oxidates, wax oxidates, and petroleum oxidates. Other rust inhibitors include organic boron compounds such as long chain alkenyl amide borates. Yet others include alkali metal sulfonates such as sodium sulfonates and sodium alkylbenzenesulfonates. Other rust inhibitors include esters of hydroxy-acids such as tartaric acid, citric acid, malic acid, lactic acid, oxalic acid, glycolic acid, hydroxypropionic acid, and hydroxyglutaric acid. Examples of these include esters, including tartrate esters (that is, especially the diesters), formed from C6-12 or C6-10 or C8-10 alcohols, e.g., isotridecyl tartrate, 2-ethylhexyl tartrate, and mixed tartrate esters of C12-14 linear alcohol/C13 branched alcohol (e.g., 80-95:20-5 ratios or 90:10 ratio). Amides and imides of such materials may also be useful. Such materials include those more fully described in copending application U.S. 61/037,843 filed Mar. 19, 2008.

Yet other rust inhibitors include polyethers. These include polyalkylene oxides such as polyethylene oxide, polypropylene oxide, and copolymers of ethylene oxide and propylene oxide. Such polyethers may be capped at one end with an alkyl group such as a butyl group. Materials of this type are commercially available and are believed to be butyl-capped polypropylene oxides or butyl-capped ethylene oxide-propylene oxide copolymers. Such materials, if they contain a hydroxy group at one end of the chain, may also be referred to as polyether alcohols or polyether polyols.
In one embodiment the rust inhibitor is a polyether. In other embodiments the rust inhibitor is one or more of a fatty amine, a condensate of a hydroxyamine with a fatty acid, a carboxylic acid, ester, or salt, a sarcosine derivative, a triazole compound, an ethyoxylated phenol, a partially oxidized wax or oil, a long chain alkenyl amide borate, an ester of a hydroxy acid, or a sodium sulfonate.

Antifoam agents may also be present. These are commercially available materials, often comprising silicone or fluorosilicone materials or acrylate ester polymers, provided in an oil diluent (e.g., 50-90% oil). In certain embodiments the antifoam agent may be used in amounts of 0.001 to 0.15 weight percent, or 0.01 to 0.1, or 0.02 to 0.05 weight percent (oil-free).

Other optional materials may include antioxidants, e.g., aromatic amine antioxidants, hindered phenolic antioxidants including ester-containing hindered phenolic antioxidants, and sulfurized olefin antioxidants. They may optionally be present in amounts of 0.01 to 5, or 0.15 to 4.5 or 0.2 to 4, or 0.2 to 2 percent by weight (particularly in lubricants for manual transmissions).

The lubricant formulation may also optionally contain a detergent. The composition of the present invention may also contain one or more detergents. Detergents are typically overbased materials, otherwise referred to as overbased or superbased salts, which are generally homogeneous Newtonian systems having by a metal content in excess of that which would be present for neutralization according to the stoichiometry of the metal and the detergent anion. The amount of excess metal is commonly expressed in terms of metal ratio, that is, the ratio of the total equivalents of the metal to the equivalents of the acidic organic compound. Overbased materials are prepared by reacting an acidic material (such as carbon dioxide) with an acidic organic compound, an inert reaction medium (e.g., mineral oil), a stoichiometric excess of a metal base, and a promoter such as a phenol or alcohol. The acidic organic material will normally have a sufficient number of carbon atoms, to provide oil-solubility.

Overbased detergents may be characterized by Total Base Number (TBN), the amount of strong acid needed to neutralize all of the material's basicity, expressed as mg KOH per gram of sample, ASTM D2896. Since overbased detergents are commonly provided in a form which contains diluent oil, for the purpose of this document, TBN is to be recalculated to an oil-free basis. Some useful detergents may have a TBN of 100 to 800, or 150 to 750, or, 400 to 700.

The metal compounds useful in making the basic metal salts are generally any Group 1 or Group 2 metal compounds (CAS version of the Periodic Table of the Elements). Examples include alkali metals such as sodium, potassium, lithium, copper, magnesium, calcium, barium, zinc, and cadmium. In one embodiment the metals are sodium, magnesium, or calcium. The anionic portion of the salt can be hydroxide, oxide, carbonate, borate, or nitrate.

In one embodiment the lubricant can contain an overbased sulfonate detergent. Another overbased material is an overbased phenate detergent, and in others an overbased salicylate, salixarate, or saligenin detergent.

The amount of the overbased detergent or detergents, if present in the formulations of the present technology, ay typically be 0.5 to 5 weight percent, or 0.7 to 5 weight percent or 1 to 3 weight percent.

Yet another component may be a pour point depressant, such as alkylnaphthalenes, polymethacrylates, vinyl acetate/fumarate or /maleate copolymers, and styrene/maleate copolymers. The pour point depressant may optionally be present in a lubricant in amounts of 0.01 to 3, or 0.05 to 1, or 0.1 to 0.3 percent by weight.

As used herein, the term "condensation product" is intended to encompass esters, amides, imides and other such materials that may be prepared by a condensation reaction of an acid or a reactive equivalent of an acid (e.g., an acid halide, anhydride, or ester) with an alcohol or amine, irrespective of whether a condensation reaction is actually performed to lead directly to the product. Thus, for example, a particular ester may be prepared by a transesterification reaction rather than directly by a condensation reaction. The resulting product is still considered a condensation product.

The amount of each chemical component described is presented exclusive of any solvent or diluent oil, which may be customarily present in the commercial material, that is, on an active chemical basis, unless otherwise indicated. However, unless otherwise indicated, each chemical or composition referred to herein should be interpreted as being a commercial grade material which may contain the isomers, by-products, derivatives, and other such materials which are normally understood to be present in the commercial grade.

As used herein, the term "hydrocarbyl substituent" or "hydrocarbyl group" is used in its ordinary sense, which is well-known to those skilled in the art; a more detailed definition thereof is found in paragraphs [0137] to [0141] of published application US 2010-0197536. Specifically, it refers to a group having a carbon atom directly attached to the remainder of the molecule and having predominantly hydrocarbon character. Examples of hydrocarbyl groups include:

hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form a ring);

substituted hydrocarbon substituents, that is, substituents containing non-hydrocarbon groups which, in the context of this invention, do not alter the predominantly hydrocarbon nature of the substituent (e.g., halo (especially chloro and fluoro), hydroxy, alkoxy, mercapto, alkylmercapto, nitro, nitroso, and sulfoxy);

hetero substituents, that is, substituents which, while having a predominantly hydrocarbon character, in the context of this invention, contain other than carbon in a ring or chain otherwise composed of carbon atoms and encompass substituents as pyridyl, furyl, thienyl and imidazolyl. Heteroatoms include sulfur, oxygen, and nitrogen. In general, no more than two, or no more than one, non-hydrocarbon substituent will be present for every ten carbon atoms in the hydrocarbyl group; alternatively, there may be no non-hydrocarbon substituents in the hydrocarbyl group.

It is known that some of the materials described above may interact in the final formulation, so that the components of the final formulation may be different from those that are initially added. For instance, metal ions (of, e.g., a detergent) can migrate to other acidic or anionic sites of other molecules. The products formed thereby, including the products formed upon employing the composition of the present invention in its intended use, may not be susceptible of easy description. Nevertheless, all such modifications and reaction products are included within the scope of the present invention; the present invention encompasses the composition prepared by admixing the components described above.

### EXAMPLES

A series of lubricants are prepared with additives characteristic of an automotive gear oil in a synthetic poly-α-olefin base oil. Detailed formulations are as presented in Table I:

**Table I**

| Component, % | Ex. 1^{∗} | Ex. 2 | Ex. 3 | Ex. 4 | Ex. 5 | Ex. 6^{∗} |
|---|---|---|---|---|---|---|
| Poly-α-olefin oil | 46.5 | 44.6 | 45 | 44.6 | 44 | 44.3 |
| Polymethacrylate¹ | 33.9 | 16.6 | 9.8 | 6.5 | 3.3 | - |
| Esterified α-olefin / maleic anhydride copolymer² | - | 24.1 | 32.5 | 37.1 | 41.8 | 45.7 |
| Olefin sulfide antiscuff agent | 4.57 | 4.57 | 4.57 | 4.57 | 4.57 | 4.57 |
| Phosphoric ester amine salt extreme pressure agent | 1.66 | 1.66 | 1.66 | 1.66 | 1.66 | 1.66 |
| Borated succinimide dispersant | 0.84 | 0.84 | 0.84 | 0.84 | 0.84 | 0.84 |
| Thiadiazole corrosion inhibitor | 0.15 | 0.15 | 0.15 | 0.15 | 0.15 | 0.15 |
| Friction modifier(s), antifoam agent(s), rust inhibitor(s) | 0.27 | 0.27 | 0.27 | 0.27 | 0.27 | 0.27 |
| mineral diluent oils | balance to = 100% | | | | | |

| | | | | | | |
|---|---|---|---|---|---|---|
| ^{∗} A reference or comparative example 1. A copolymer of about 30 weight percent 2-ethylhexyl methacrylate and about 68 weight percent mixed C12-C14 alkyl methacrylates, including about 1.8% dimethylaminopropyl methacrylamide. 2. A copolymer of dodecene and maleic anhydride (approximately 1:1 mole ratio), esterified predominantly with mixed C8-C10 alcohols and with minor amounts of longer chain fatty alcohols and butyl alcohol; further containing about 1.7% condensed aminoethyl ethyleneurea. | | | | | | |

The above exemplary formulations are tested for their effect on fluoroelastomer seals. The seals and test method are as described in ASTM D5662. Samples of the fluoroelastomer are measured before and after exposure to the lubricant, to determine the tensile strength percent change and the elongation to break percent change. The conditions of the exposure to the fluid are 240 hours (10 days) at 150 °C. It is desired that the tensile strength percent change should be relatively large (positive) and the elongation to break percent change should be less negative, that is, nearer to zero change. Results are shown in Table II.

**Table II**

| | Ex. 1^{∗} | Ex. 2 | Ex. 3 | Ex. 4 | Ex.5 | Ex.6^{∗} |
|---|---|---|---|---|---|---|
| Tensile strength change, % | 1.6 | 7.4 | 12.1 | 11.4 | 9.9 | 16.9 |
| Elongation change, % | -55.4 | ** | -43.0 | -41.7 | -40.5 | -36.6 |

| | | | | | | |
|---|---|---|---|---|---|---|
| ^{∗} Reference example ^{∗∗}Measured value of -34.5 is unexplained and may be erroneous | | | | | | |

The results show that replacement of portions of amine-containing polymethacrylate in a lubricant formulation with comparable amounts of the nitrogen-containing esterified α-olefin / maleic anhydride copolymer leads to improved seal performance of fluoropolymer seals, while at the same time improving oxidative cleanliness as measured by the CEC L-48 DKA oxidation test (192 hours at 150 °C). This oxidation test reports the increase in kinematic viscosity at 100 °C and at 40 °C at the end of the test. Results are shown in Table III, where smaller amounts of viscosity increase are desirable.

**Table III**

| | Ex. 1^{∗} | Ex. 2 | Ex. 3 | Ex. 4 | Ex.5 | Ex.6^{∗} |
|---|---|---|---|---|---|---|
| KV100 viscosity increase (%) | 112 | 107 | 101 | 99 | 97 | 77 |
| KV40 viscosity increase (%) | 162 | 140 | 127 | 128 | 123 | 98 |

While it is known to improve seal performance by reducing the amount of basic amine in a formulation, such a reduction may often lead to deterioration in dispersancy performance, oxidative stability, or cleanliness. The disclosed technology permits an economical method for improvement in seals performance while maintaining or improving oxidative stability.

The mention of any document is not an admission that such document qualifies as prior art or constitutes the general knowledge of the skilled person in any jurisdiction. It is to be understood that the upper and lower amount, range, and ratio limits set forth herein may be independently combined. Similarly, the ranges and amounts for each element of the invention can be used together with ranges or amounts for any of the other elements.

As used herein, the transitional term "comprising," which is synonymous with "including," "containing," or "characterized by," is inclusive or open-ended and does not exclude additional, un-recited elements or method steps. However, in each recitation of "comprising" herein, it is intended that the term also encompass, as alternative embodiments, the phrases "consisting essentially of' and "consisting of," where "consisting of' excludes any element or step not specified and "consisting essentially of' permits the inclusion of additional un-recited elements or steps that do not materially affect the essential or basic and novel characteristics of the composition or method under consideration. The expression "consisting of' or "consisting essentially of," when applied to an element of a claim, is intended to restrict all species of the type represented by that element, notwithstanding the presence of "comprising" elsewhere in the claim.

## Claims

1. A lubricant composition comprising
(a) an oil of lubricating viscosity;
(b) a poly(meth)acrylate ester polymer comprising 50 to 99.5 weight percent ester monomer units wherein the alcohol-derived component of the ester monomer contains 6 to 24 carbon atoms and 0.5 to 5 weight percent of amine nitrogen-containing dispersant monomer units, said polymer having a nitrogen content of 0.05 to 1.0 weight percent;
(c) an esterified copolymer with a backbone comprising units derived from (i) an α-olefin monomer of at least 6 carbon atoms and (ii) an ethylenically unsaturated carboxylic acid; or ester or anhydride thereof, wherein the mole ratio of (i) α-olefin monomer to (ii) carboxylic acid or ester or anhydride monomer is 1:3 to 3:1, said copolymer further containing nitrogen functionality in groups pendant from the copolymer backbone, said pendant groups being represented by the structure 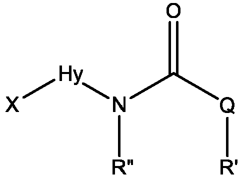
where X represents the point of attachment to the copolymer backbone through an ester, amide, imide, or amine salt linkage, Hy represents a hydrocarbylene group of 1 to 6 (or 1 to 4, or 2) carbon atoms; Q is -O- or -NR¹- or -CR²R³-; each of R¹, R², and R³ is independently hydrogen or a C₁ to C₆ alkyl group; R' and R" are each independently H or alkyl groups or are alkylene groups joined together to form, with the N-C(O)-Q structure, a 5- or 6-membered ring; and
wherein the amount of the poly(meth)acrylate polymer (b) is 2 to 30 percent by weight and the amount of the esterified copolymer (c) is 1 to 45 or 10 to 45 percent by weight.

2. The lubricant composition of claim 1 wherein the total amount of the poly(meth)acrylate ester polymer (b) plus the esterified copolymer (c) is 3 to 65 or 15 to 60 or 25 to 60 percent by weight.

3. The lubricant composition of any of claims 1 and 2 wherein the poly(meth)acrylate ester polymer (b) further comprises monomer units of one or more C1 to C5 alkyl (meth)acrylates or monomer units of C6 to C10 alkyl (meth)acrylates and C12 to C18 alkyl (meth)acrylates.

4. The lubricant composition of any of claims 1 thorough 3 wherein the poly(meth)acrylate ester copolymer (b) comprises monomer units of dimethylaminopropyl methacrylate or dimethylaminoethyl methacrylate.

5. The lubricant composition of any of claims 1 through 4 wherein the poly(meth)acrylate ester copolymer (b) has a weight average molecular weight of 5,000 to about 75,000, or 7,000 to 50,000, or 10,000 to 30,000.

6. The lubricant composition any of claims 1 through 7 wherein, in the pendant group of esterified copolymer (c), X represents an amide, imide, or amine salt linkage, Hy is an ethylene group, Q is NH, and R' and R" together with the N-C(O)-Q structure form a five-membered ring.

7. The lubricant composition of any of claims 1 through 6 wherein the pendant group is the reaction product of 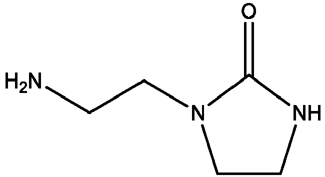 onto the copolymer backbone through an amide or imide structure.

8. The lubricant composition of any of claims 1 through 7 wherein the esterified copolymer (c) comprises monomer units of dodecene.

9. The lubricant composition of any of claims 1 through 8 wherein the ester monomer units in esterified copolymer (c) comprise monomer units of esterified maleic anhydride, wherein the alcohol-derived portion of the ester comprises the alkyl portion of one or more C4 to C18 alcohols.

10. The lubricant composition of any of claims 1 through 9 wherein the ester monomer units in esterified copolymer (c) comprise monomer units of butanol, of one or more C8-C10 alcohols, and of a C14-C18 alcohol.

11. The lubricant composition of any of claims 1 through 10 wherein the weight average molecular weight of the esterified copolymer (c) is 5,000 to 35,000 or 5,000 to 21,000 or 8,000 to 20,000 or 12,000 to 18,000.

12. The lubricant composition of any of claims 1 through 11 further comprising at least one of an antioxidant, a detergent, a corrosion inhibitor, an anti-wear agent, an extreme pressure agent, or mixtures thereof.

13. A method for lubricating a mechanical device that comprises at least one fluoroelastomeric seal that comes into contact with the lubricant for said device; comprising supplying to said device the lubricant composition of any one of claims 1 through 12.

14. A method for improving the fluoroelastomer seals compatibility of a lubricant composition comprising (a) an oil of lubricating viscosity and (b) a poly(meth)acrylate ester polymer comprising 50 to 99.5 weight percent ester monomer units wherein the alcohol-derived component of the ester monomer contains 6 to 24 carbon atoms and 0.5 to 5 weight percent of amine nitrogen-containing dispersant monomer units, said polymer having a nitrogen content of 0.05 to 1.0 weight percent;
said method comprising including in said lubricant composition:
(c) an esterified copolymer with a backbone comprising units derived from (i) an α-olefin monomer of at least 6 carbon atoms and (ii) an ethylenically unsaturated carboxylic acid or derivative thereof, wherein the mole ratio of (i) α-olefin monomer to (ii) carboxylic acid or derivative monomer is 1:3 to 3:1, said copolymer further containing nitrogen functionality in groups pendant from the copolymer backbone, said pendant groups being represented by the structure 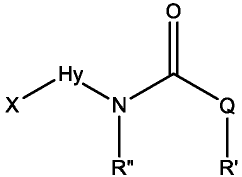 where X represents the point of attachment to the copolymer backbone through an ester or amide or imide linkage, Hy represents a hydrocarbylene group of 1 to 6 (or 1 to 4, or 2) carbon atoms; Q is -O- or -NR¹- or -CR²R³-; each of R¹, R², and R³ is independently hydrogen or a C₁ to C₆ alkyl group; R' and R" are each independently H or alkyl groups or are alkylene groups joined together to form, with the N-C(O)-Q structure, a 5- or 6-membered ring.

15. Use of an esterified copolymer for improving the fluoroelastomer seals compatibility of a lubricant composition, the lubricant comprising (a) an oil of lubricating viscosity and (b) a poly(meth)acrylate ester polymer comprising 50 to 99.5 weight percent ester monomer units wherein the alcohol-derived component of the ester monomer contains 6 to 24 carbon atoms and 0.5 to 5 weight percent of amine nitrogen-containing dispersant monomer units, said polymer having a nitrogen content of 0.05 to 1.0 weight percent; and wherein the use comprises including in said lubricant composition the esterified copolymer, wherein the esterified copolymer has a backbone comprising units derived from (i) an α-olefin monomer of at least 6 carbon atoms and (ii) an ethylenically unsaturated carboxylic acid or derivative thereof, wherein the mole ratio of (i) α-olefin monomer to (ii) carboxylic acid or derivative monomer is 1:3 to 3:1, said copolymer further containing nitrogen functionality in groups pendant from the copolymer backbone, said pendant groups being represented by the structure 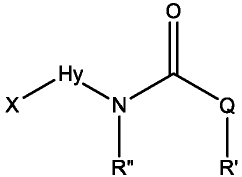 where X represents the point of attachment to the copolymer backbone through an ester or amide or imide linkage, Hy represents a hydrocarbylene group of 1 to 6 (or 1 to 4, or 2) carbon atoms; Q is -O- or -NR¹- or -CR²R³-; each of R¹, R², and R³ is independently hydrogen or a C₁ to C₆ alkyl group; R' and R" are each independently H or alkyl groups or are alkylene groups joined together to form, with the N-C(O)-Q structure, a 5- or 6-membered ring.

## Patentansprüche

1. Schmiermittelzusammensetzung, umfassend:
(a) ein Öl mit Schmierviskosität;
(b) ein Poly(meth)acrylatesterpolymer, umfassend zu 50 bis 99,5 Gewichtsprozent Estermonomereinheiten, wobei die von Alkohol abstammende Komponente des Estermonomers 6 bis 24 Kohlenstoffatome und zu 0,5 bis 5 Gewichtsprozent aminstickstoffhaltige Dispergiermittelmonomereinheiten enthält, wobei das Polymer einen Stickstoffgehalt von 0,05 bis 1,0 Gewichtsprozent aufweist;
(c) ein verestertes Copolymer mit einem Rückgrat, umfassend Einheiten, die von (i) einem α-Olefin-Monomer mit mindestens 6 Kohlenstoffatomen und (ii) einer ethylenisch ungesättigten Carbonsäure abstammen; oder Ester oder Anhydrid davon, wobei das Molverhältnis von (i) α-Olefin-Monomer zu (ii) Carbonsäure oder Ester- oder Anhydridmonomer 1 : 3 bis 3 : 1 beträgt, wobei das Copolymer ferner Stickstofffunktionalität in Seitengruppen an dem Copolymerrückgrat enthält, wobei die Seitengruppen durch die folgende Struktur dargestellt werden 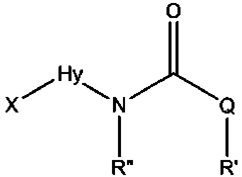
wobei X den Anlagerungspunkt an den Copolymerrückgrat durch eine Ester-, Amid-, Imid- oder Aminsalzbindung darstellt, Hy eine Hydrocarbylengruppe mit 1 bis 6 (oder 1 bis 4 oder 2) Kohlenstoffatomen darstellt; Q -O- oder -NR¹- oder -CR²R³- ist; jeweils R¹, R² und R³ unabhängig Wasserstoff oder eine C₁- bis C₆-Alkylgruppe ist; R' und R" jeweils unabhängig H oder Alkylgruppen sind oder Alkylengruppen sind, die miteinander verbunden sind, um mit der NC(O)-Q-Struktur einen 5- oder 6-gliedrigen Ring auszubilden; und
wobei die Menge des Poly(meth)acrylatpolymers (b) 2 bis 30 Gewichtsprozent beträgt und die Menge des veresterten Copolymers (c) 1 bis 45 oder 10 bis 45 Gewichtsprozent beträgt.

2. Schmiermittelzusammensetzung nach Anspruch 1, wobei die Gesamtmenge des Poly(meth)acrylatesterpolymers (b) plus des veresterten Copolymers (c) 3 bis 65 oder 15 bis 60 oder 25 bis 60 Gewichtsprozent beträgt.

3. Schmiermittelzusammensetzung nach einem der Ansprüche 1 und 2, wobei das Poly(meth)acrylatesterpolymer (b) ferner Monomereinheiten von einem oder mehreren C1- bis C5-Alkyl(meth)acrylaten oder Monomereinheiten von C6- bis C10-Alkyl(meth)acrylaten und C12- bis C18-Alkyl(meth)acrylaten umfasst.

4. Schmiermittelzusammensetzung nach einem der Ansprüche 1 bis 3, wobei das Poly(meth)acrylatestercopolymer (b) Monomereinheiten von Dimethylaminopropylmethacrylat oder Dimethylaminoethylmethacrylat umfasst.

5. Schmierstoffzusammensetzung nach einem der Ansprüche 1 bis einschließlich 4, wobei das Poly(meth)acrylatestercopolymer (b) ein Massenmittel von 5.000 bis etwa 75.000 oder 7.000 bis 50.000 oder 10.000 bis 30.000 aufweist.

6. Schmiermittelzusammensetzung nach einem der Ansprüche 1 bis 7, wobei in der Seitengruppe von verestertem Copolymer (c) X eine Amid-, Imid- oder Aminsalzbindung darstellt, Hy eine Ethylengruppe ist, Q NH ist und R' und R" zusammen mit der NC(O)-Q-Struktur einen fünfgliedrigen Ring ausbilden.

7. Schmiermittelzusammensetzung nach einem der Ansprüche 1 bis 6, wobei die Seitengruppe das Reaktionsprodukt von 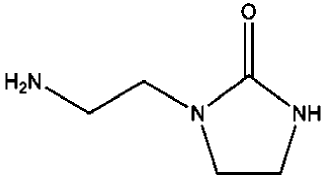 auf den Copolymerrückgrat durch eine Amid- oder Imidstruktur ist.

8. Schmiermittelzusammensetzung nach einem der Ansprüche 1 bis 7, wobei das veresterte Copolymer (c) Monomereinheiten von Dodecen umfasst.

9. Schmiermittelzusammensetzung nach einem der Ansprüche 1 bis 8, wobei die Estermonomereinheiten in verestertem Copolymer (c) Monomereinheiten von verestertem Maleinsäureanhydrid umfassen, wobei der von Alkohol abstammende Anteil des Esters den Alkylanteil von einem oder mehreren C4- bis C18-Alkoholen umfasst.

10. Schmiermittelzusammensetzung nach einem der Ansprüche 1 bis 9, wobei die Estermonomereinheiten in verestertem Copolymer (c) Monomereinheiten von Butanol, von einem oder mehreren C8-C10-Alkoholen und von einem C14-C18-Alkohol umfassen.

11. Schmiermittelzusammensetzung nach einem der Ansprüche 1 bis 10, wobei das Massenmittel des veresterten Copolymers (c) 5.000 bis 35.000 oder 5.000 bis 21.000 oder 8.000 bis 20.000 oder 12.000 bis 18.000 beträgt.

12. Schmiermittelzusammensetzung nach einem der Ansprüche 1 bis 11, ferner umfassend mindestens eines von einem Antioxidans, einem Detergens, einem Korrosionsinhibitor, einem Antiverschleißmittel, einem Hochdruckmittel oder Mischungen davon.

13. Verfahren zum Schmieren einer mechanischen Vorrichtung, umfassend mindestens eine Fluorelastomerdichtung, die mit dem Schmiermittel für die Vorrichtung in Berührung kommt; umfassend ein Zuführen der Schmiermittelzusammensetzung nach einem der Ansprüche 1 bis 12 zu der Vorrichtung.

14. Verfahren zum Verbessern der Kompatibilität mit Fluorelastomerdichtungen einer Schmiermittelzusammensetzung, umfassend (a) ein Öl mit Schmierviskosität und (b) ein Poly(meth)acrylatesterpolymer, umfassend zu 50 bis 99,5 Gewichtsprozent Estermonomereinheiten, wobei die von Alkohol abstammende Komponente des Estermonomers 6 bis 24 Kohlenstoffatome und zu 0,5 bis 5 Gewichtsprozent aminstickstoffhaltige Dispergiermittelmonomereinheiten enthält, wobei das Polymer einen Stickstoffgehalt von 0,05 bis 1,0 Gewichtsprozent aufweist;
das Verfahren umfassend ein Einschließen in die Schmiermittelzusammensetzung von:
(c) einem veresterten Copolymer mit einem Rückgrat, umfassend Einheiten, die von (i) einem α-Olefin-Monomer mit mindestens 6 Kohlenstoffatomen und (ii) einer ethylenisch ungesättigten Carbonsäure oder einem Derivat davon abstammen, wobei das Molverhältnis von (i) α-Olefin-Monomer zu (ii) Carbonsäure oder Derivatmonomer 1 : 3 bis 3 : 1 beträgt, wobei das Copolymer ferner Stickstofffunktionalität in Seitengruppen an dem Copolymerrückgrat enthält, wobei die Seitengruppen durch die folgende Struktur dargestellt werden 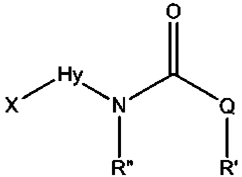 wobei X den Anlagerungspunkt an den Copolymerrückgrat durch eine Ester- oder Amid- oder Imidbindung darstellt, Hy eine Hydrocarbylengruppe mit 1 bis 6 (oder 1 bis 4 oder 2) Kohlenstoffatomen darstellt; Q -O- oder -NR¹- oder -CR²R³- ist; jeweils R¹, R² und R³ unabhängig Wasserstoff oder eine C₁- bis C₆-Alkylgruppe ist; R' und R" jeweils unabhängig H oder Alkylgruppen sind oder Alkylengruppen sind, die miteinander verbunden sind, um mit der NC(O)-Q-Struktur einen 5- oder 6-gliedrigen Ring auszubilden.

15. Verwendung eines veresterten Copolymers zum Verbessern der Kompatibilität mit Fluorelastomerdichtungen einer Schmiermittelzusammensetzung, das Schmiermittel umfassend (a) ein Öl mit Schmierviskosität und (b) ein Poly(meth)acrylatesterpolymer, umfassend zu 50 bis 99,5 Gewichtsprozent Estermonomereinheiten, wobei die von Alkohol abstammende Komponente des Estermonomers 6 bis 24 Kohlenstoffatome und zu 0,5 bis 5 Gewichtsprozent aminstickstoffhaltige Dispergiermittelmonomereinheiten enthält, wobei das Polymer einen Stickstoffgehalt von 0,05 bis 1,0 Gewichtsprozent aufweist; und wobei die Verwendung das Einschließen des veresterten Copolymers in der Schmiermittelzusammensetzung umfasst, wobei das veresterte Copolymer einen Rückgrat aufweist, umfassend Einheiten, die von (i) einem α-Olefin-Monomer mit mindestens 6 Kohlenstoffatomen und (ii) einer ethylenisch ungesättigten Carbonsäure oder einem Derivat davon abstammen, wobei das Molverhältnis von (i) α-Olefin-Monomer zu (ii) Carbonsäure- oder Derivatmonomer 1 : 3 bis 3 : 1 beträgt, wobei das Copolymer ferner Stickstofffunktionalität in Seitengruppen an dem Copolymerrückgrat enthält, wobei die Seitengruppen durch die folgende Struktur dargestellt werden 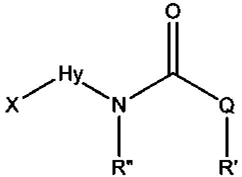 wobei X den Anlagerungspunkt an den Copolymerrückgrat durch eine Ester- oder Amid- oder Imidbindung darstellt, Hy eine Hydrocarbylengruppe mit 1 bis 6 (oder 1 bis 4 oder 2) Kohlenstoffatomen darstellt; Q -O- oder -NR¹- oder -CR²R³- ist; jeweils R¹, R² und R³ unabhängig Wasserstoff oder eine C₁- bis C₆-Alkylgruppe ist; R' und R" jeweils unabhängig H oder Alkylgruppen sind oder Alkylengruppen sind, die miteinander verbunden sind, um mit der NC(O)-Q-Struktur einen 5- oder 6-gliedrigen Ring auszubilden.

## Revendications

1. Composition lubrifiante comprenant
(a) une huile de viscosité de lubrification ;
(b) un polymère d'ester de poly(méth)acrylate comprenant 50 à 99,5 % en poids de motifs monomères d'ester dans lequel le composant dérivé d'alcool du monomère d'ester contient de 6 à 24 atomes de carbone et de 0,5 à 5 % en poids de motifs monomères de dispersant contenant de l'azote aminé, ledit polymère ayant une teneur en azote de 0,05 à 1,0 % en poids ;
(c) un copolymère estérifié doté d'un squelette comprenant des motifs dérivés (i) d'un monomère d'a-oléfine d'au moins 6 atomes de carbone et (ii) d'un acide carboxylique éthyléniquement insaturé ; ou un ester ou un anhydride de celui-ci, le rapport molaire (i) du monomère d'a-oléfine à (ii) l'acide ou l'ester ou au monomère d'anhydride carboxylique est de 1:3 à 3:1, ledit copolymère contenant en outre une fonctionnalité azotée dans des groupes pendants du copolymère squelette, lesdits groupes pendants étant représentés par la structure 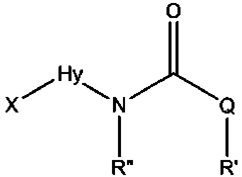
X représentant le point de fixation au squelette du copolymère par une liaison ester, amide, imide ou sel d'amine, Hy représentant un groupe hydrocarbylène de 1 à 6 (ou de 1 à 4, ou 2) atomes de carbone ; Q représente -O- ou -NR¹- ou -CR²R³- ; chacun de R¹, R² et R³ étant indépendamment un hydrogène ou un groupe alkyle en C₁ à C₆; R' et R" étant chacun indépendamment H ou des groupes alkyle ou étant des groupes alkylène joints ensemble pour former, avec la structure NC(O)-Q, un cycle à 5 ou 6 chaînons ; et
la quantité du polymère de poly(méth)acrylate (b) est de 2 à 30 % en poids et la quantité du copolymère estérifié (c) est de 1 à 45 ou 10 à 45 % en poids.

2. Composition lubrifiante selon la revendication 1, dans laquelle la quantité totale du polymère d'ester de poly(méth)acrylate (b) plus le copolymère estérifié (c) est de 3 à 65 ou de 15 à 60 ou de 25 à 60 % en poids.

3. Composition lubrifiante selon l'une quelconque des revendications 1 et 2, dans laquelle le polymère d'ester de poly(méth)acrylate (b) comprend en outre des motifs monomères d'un ou plusieurs (méth)acrylates d'alkyle en C1 à C5 ou des motifs monomères de (méth)acrylates d'alkyle en C6 à C10 ou (méth)acrylates d'alkyle en C12 à C18.

4. Composition lubrifiante selon l'une quelconque des revendications 1 à 3, dans laquelle le copolymère d'ester de poly(méth)acrylate (b) comprend des motifs monomères de méthacrylate de diméthylaminopropyle ou de méthacrylate de diméthylaminoéthyle.

5. Composition lubrifiante selon l'une des quelconques des revendications 1 à 4, dans laquelle le polymère d'ester de poly(méth)acrylate a une masse moléculaire moyenne en masse de 5 000 à environ 75 000, ou de 7 000 à 50 000, ou de 10 000 à 30 000.

6. Composition lubrifiante selon l'une quelconque des revendications 1 à 7, dans laquelle, dans le groupe pendant du copolymère estérifié (c), X représente une liaison amide, imide ou sel d'amine, Hy est un groupe éthylène, Q représente NH, et R' et R" ensemble avec la structure NC(O)-Q forment un cycle à cinq chaînons.

7. Composition lubrifiante selon l'une quelconque des revendications 1 à 6, dans laquelle le groupe pendant est le produit de réaction de 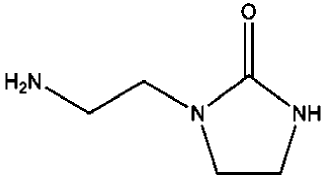 sur le squelette du copolymère par une structure amide ou imide.

8. Composition lubrifiante selon l'une quelconque des revendications 1 à 7, dans laquelle le copolymère estérifié (c) comprend des motifs monomères de dodécène.

9. Composition lubrifiante selon l'une quelconque des revendications 1 à 8, dans laquelle les motifs monomères d'ester dans le copolymère estérifié (c) comprennent des motifs monomères d'anhydride maléique estérifié, la partie dérivée d'alcool de l'ester comprenant la partie alkyle d'un ou plusieurs alcools en C4 à C18.

10. Composition lubrifiante selon l'une quelconque des revendications 1 à 9, dans laquelle les motifs monomères d'ester dans le copolymère estérifié (c) comprennent des motifs monomères de butanol, d'un ou plusieurs alcools en C8 à C10 et d'un alcool en C14 à C18.

11. Composition lubrifiante selon l'une quelconque des revendications 1 à 10, dans laquelle la masse moléculaire moyenne en masse du copolymère estérifié (c) est de 5 000 à 35 000 ou de 5 000 à 21 000 ou de 8 000 à 20 000 ou de 12 000 à 18 000.

12. Composition lubrifiante selon l'une quelconque des revendications 1 à 11, comprenant en outre un antioxydant et/ou un détergent et/ou un inhibiteur de corrosion et/ou un agent anti-usure et/ou un agent à pression extrême ou des mélanges de ceux-ci.

13. Procédé de lubrification d'un dispositif mécanique qui comprend au moins un joint fluoroélastomère venant en contact avec le lubrifiant pour ledit dispositif ; comprenant la fourniture audit dispositif de la composition lubrifiante selon l'une quelconque des revendications 1 à 12.

14. Procédé destiné à améliorer la compatibilité des joints en élastomère fluoré d'une composition lubrifiante comprenant (a) une huile de viscosité lubrifiante et (b) un polymère d'ester de poly(méth)acrylate comprenant 50 à 99,5 % en poids de motifs monomères d'ester dans lequel le composant dérivé d'alcool du monomère d'ester contient 6 à 24 atomes de carbone et 0,5 à 5 % en poids de motifs monomères de dispersant contenant de l'azote aminé, ledit polymère ayant une teneur en azote de 0,05 à 1,0 % en poids ;
ledit procédé comprenant l'inclusion dans ladite composition lubrifiante :
(c) d'un copolymère estérifié doté d'un squelette comprenant des motifs dérivés (i) d'un monomère d'a-oléfine d'au moins 6 atomes de carbone et (ii) d'un acide carboxylique éthyléniquement insaturé ou d'un dérivé de celui-ci, le rapport molaire (i) d'un monomoère d'a-oléfine à (ii) un acide carboxylique ou un monomère dérivé étant de 1:3 à 3:1, ledit copolymère contenant en outre une fonctionnalité azotée dans des groupes pendants du squelette du copolymère, lesdits groupes pendants étant représentés par la structure 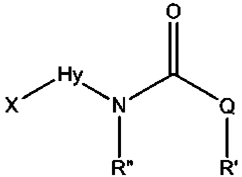 X représentant le point de fixation au squelette du copolymère par une liaison ester ou amide ou imide, Hy représentant un groupe hydrocarbylène de 1 à 6 (ou de 1 à 4, ou 2) atomes de carbone ; Q représentant -O- ou -NR¹- ou -CR²R³- ; chacun de R¹, R² et R³ étant indépendamment un hydrogène ou un groupe alkyle en C₁ à C₆; R' et R" étant chacun indépendamment H ou des groupes alkyle ou étant des groupes alkylène joints ensemble pour former, avec la structure NC(O)-Q, un cycle à 5 ou 6 chaînons.

15. Utilisation d'un copolymère estérifié pour améliorer la compatibilité des joints en élastomère fluoré d'une composition lubrifiante, le lubrifiant comprenant (a) une huile de viscosité lubrifiante et (b) un polymère d'ester de poly(méth)acrylate comprenant 50 à 99,5 % en poids de motifs monomères d'ester dans lequel le composant dérivé d'alcool du monomère d'ester contient 6 à 24 atomes de carbone et 0,5 à 5 % en poids de motifs monomères de dispersant contenant de l'azote aminé, ledit polymère ayant une teneur en azote de 0,05 à 1,0 % en poids ; et l'utilisation comprenant l'inclusion dans ladite composition lubrifiante du copolymère estérifié, le copolymère estérifié ayant un squelette comprenant des motifs dérivés (i) d'un monomère d'a-oléfine d'au moins 6 atomes de carbone et (ii) d'un acide carboxylique éthyléniquement insaturé ou d'un dérivé celui-ci, le rapport molaire (i) du monomère d'a-oléfine à (ii) l'acide carboxylique ou au monomère dérivé est de 1:3 à 3:1, ledit copolymère contenant en outre une fonctionnalité azotée dans des groupes pendants du squelette du copolymère, lesdits groupes pendants étant représentés par la structure 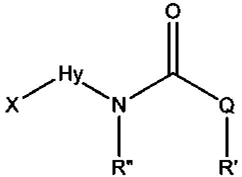 X représentant le point de fixation au squelette du copolymère par une liaison ester ou amide ou imide, Hy représentant un groupe hydrocarbylène de 1 à 6 (ou de 1 à 4, ou 2) atomes de carbone ; Q représentant -O- ou -NR¹- ou -CR²R³- ; chacun de R¹, R² et R³ étant indépendamment un hydrogène ou un groupe alkyle en C₁ à C₆; R' et R" étant chacun indépendamment H ou des groupes alkyle ou étant des groupes alkylène joints ensemble pour former, avec la structure NC(O)-Q, un cycle à 5 ou 6 chaînons.
